# EUROPEAN PATENT APPLICATION

(11) **EP 4 583 547 A1**
(43) Date of publication of application: **09.07.2025**
(21) Application number: 23859492.3
(22) Date of filing: 01.09.2023
(51) Int. Cl.: H04W 4/24

(54) **XDR GENERATION METHOD AND DEVICE, AND COMPUTER READABLE MEDIUM**

(30) Priority: 02.09.2022 CN 202211069668
(71) Applicant: ZTE Corporation, Shenzhen, Guangdong 518057 (CN)
(72) Inventor: ZHANG, Rong, Shenzhen, Guangdong 518057 (CN); LU, Shenghu, Shenzhen, Guangdong 518057 (CN); JIA, Tingyao, Shenzhen, Guangdong 518057 (CN)
(74) Representative: Canzler & Bergmeier Patentanwälte Partnerschaft mbB
(86) International application number: PCT/CN2023/116465
(87) International publication number: WO 2024/046464

(57) **Abstract**

The present disclosure provides an XDR generation method, comprising: acquiring traffic data; determining a data stream corresponding to the traffic data as a target data stream, wherein data streams are in one-to-one correspondence to terminal-server combinations, and each terminal-server combination is a terminal and a server connected to each other; and updating statistical data of the target data stream according to the traffic data. The present disclosure also provides an XDR generation device and a computer readable medium.

## Description

### CROSS REFERENCE TO RELATED APPLICATIONS

The present disclosure claims the priority to Chinese Patent Application No. 202211069668.2 filed on September 2, 2022, the contents of which are incorporated herein by reference in their entirety.

### TECHNICAL FIELD

The present disclosure relates to the field of X Detailed Record (XDR) technology, and in particular, to an XDR generation method and device, and a computer readable medium.

### BACKGROUND

In many cases, deep analysis needs to be performed on internet access data of users to form XDRs as a basis for improving network quality and user satisfaction.

However, the existing technology for generating the XDRs needs numerous computing resources and large storage space, and cannot obtain reasonable statistical indicators to meet data analysis requirements.

### SUMMARY

In a first aspect, an embodiment of the present disclosure provides an XDR generation method, including: acquiring traffic data; determining a data stream corresponding to the traffic data as a target data stream; wherein, the data stream is in one-to-one correspondence with a terminal-server combination, and each terminal-server combination includes one terminal and one server connected to each other; and updating statistical data of the target data stream according to the traffic data.

In a second aspect, an embodiment of the present disclosure provides an XDR generation device, including at least one storage device and at least one processor; and the at least one storage device stores a computer program executable by the at least one processor, and when executed by the at least one processor, the computer program implements the XDR generation method described in any one of the embodiments of the present disclosure.

In a third aspect, an embodiment of the present disclosure provides a computer readable medium having stored thereon a computer program which, when executed by a processor, implements the XDR generation method described in any one of the embodiments of the present disclosure.

### BRIEF DESCRIPTION OF DRAWINGS

In the drawings for the embodiments of the present disclosure:
FIG. 1 is a flowchart illustrating an XDR generation method according to an embodiment of the present disclosure;
FIG. 2 is a flowchart illustrating an XDR generation method according to another embodiment of the present disclosure;
FIG. 3 is a schematic diagram illustrating deployment of a Deep Packet Inspection (DPI) device in an XDR generation method according to another embodiment of the present disclosure;
FIG. 4 is a block diagram of a DPI device used in an XDR generation method according to another embodiment of the present disclosure;
FIG. 5 is a schematic diagram illustrating a process of an XDR generation method according to another embodiment of the present disclosure; and
FIG. 6 is a block diagram of an XDR generation device according to an embodiment of the present disclosure.

### DETAIL DESCRIPTION OF EMBODIMENTS

In order to enable those of ordinary skill in the art to better understand the technical solutions of the present disclosure, an XDR generation method and device, and a computer readable medium provided in the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described below. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe the specific embodiments, and are not intended to limit the present disclosure. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

The present disclosure is not limited to the embodiments illustrated by the drawings, but includes modifications to configuration formed based on a manufacturing process. Thus, regions shown in the drawings are illustrative, and shapes of the regions shown in the drawings illustrate specific shapes of regions of elements, but are not intended to make limitations.

With gradual improvement of communication technology and rapid development of network technology, communication operators have high requirements on how to realize effective utilization of networks, and expect to achieve the goal of value-driven operations and maintenance based on the principles of reducing cost, increasing efficiency, improving quality, and generating revenue. In the current digital environment, almost all the measures around the operations and maintenance are developed based on data, and as the resources exclusively held by the operators, network and service data becomes the key force of the value-driven operations and maintenance of networks. Based on practical experience of intelligent big data platforms, five differentiation capability sets of big data in the communication field are summarized as follows: data production capability, data connectivity capability, data judgment capability, data monetization capability, and data prediction capability.

The data production capability is the beginning of the operations and maintenance of the operators. The "edge-pipe-cloud" is a conceptual mode starting from the internet era, and diversified access terminals, network access pipelines, and internet cloud in home broadband networks are the most basic connection components, and also contain a great amount of data value. An important way of accumulating raw data is to analyze, interpret, and understand the traffic of terminals, home wireless networks, access networks, bearer networks, and the Internet and analyze the meaning of the number of the network traffic.

In the intelligent big data platforms, control-plane traffic data and user-plane traffic data in the network access pipelines are respectively subjected to deep analysis by Deep Packet Inspection (DPI) at a network access side to form XDRs, so as to endow the traffic data with actual meanings. DPI has a good service identification capability, and can understand the network traffic thoroughly. Driven by diversified markets, data consumption and production gradually becomes huge, resulting in powerful data production capability of the intelligent big data platforms and infinite possibilities for the data to realize application-layer value.

Therefore, how to efficiently generate high-quality XDRs has great significance for improving the data production capability.

In some existing technologies, a behavior of a user of accessing a website may generate a plurality of socket connections between a user equipment (i.e., a terminal) and a website content source (i.e., a server), and one XDR is generated for each socket connection.

Thus, the number of XDRs in the existing technology is huge, numerous computing resources and storage resources are needed for generation, transmission, storage, analysis, and processing of the XDRs, and especially in scenarios of home broadband networks, more resources are needed.

Moreover, the traffic data between the same terminal and the server is divided into a plurality of uncorrelated XDRs in the existing technology, but the traffic data is originally highly correlated, such that statistical indicators of the XDRs such generated are unreasonable, and cannot meet data analysis requirements.

In view of the above technical problems, in a first aspect, an embodiment of the present disclosure provides an XDR generation method.

The XDR is also called "X Detailed Record", and is a feature statistics report about data obtained by analysis of internet access data (traffic data) of a user (e.g., a home broadband user).

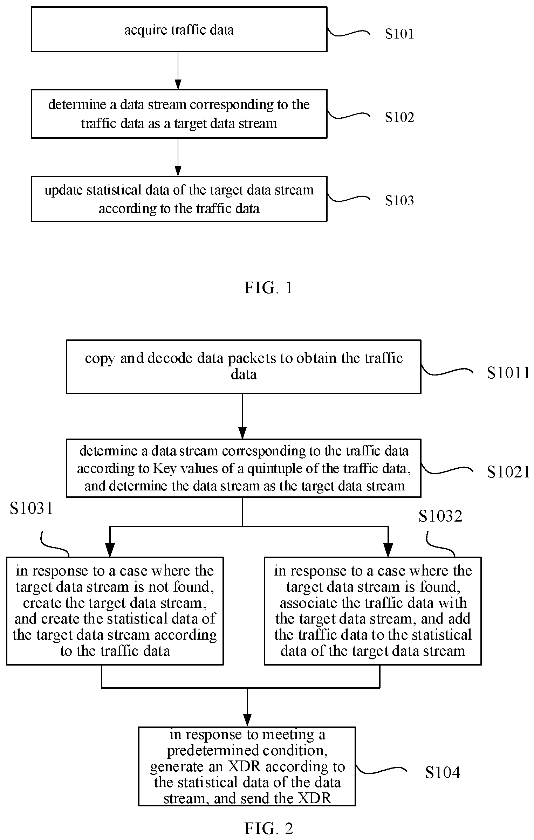

Referring to FIG. 1, an XDR generation method according to an embodiment of the present disclosure includes the following operations S101 to S103.

At operation S101, traffic data is acquired.

At this operation, contents (i.e., the traffic data) of data packets (including upstream data packets and downstream data packets) transmitted between a user (i.e., a terminal) and a website (i.e., a server) are obtained.

At operation S102, a data stream corresponding to the traffic data is determined as a target data stream.

The data stream is in one-to-one correspondence with a terminal-server combination, and each terminal-server combination includes one terminal and one server connected to each other. According to the contents of the traffic data, the "data stream" corresponding to the contents of the traffic data, i.e., the target data stream, is determined.

Each terminal and each server form one "terminal-server combination", that is, as long as at least one of the terminal and the server is different, the formed combination is different. All traffic transmitted between the terminal and the server of each terminal-server combination (possibly separately transmitted in a plurality of connections) belongs to one data stream. Thus, the data streams are in one-to-one correspondence with the terminal-server combinations, that is, each data stream corresponds to one terminal-server combination, and the terminal-server combinations corresponding to different data streams are different; and each terminal-server combination corresponds to one data stream, and the data streams corresponding to different terminal-server combinations are different.

At operation S103, statistical data of the target data stream is updated according to the traffic data.

Each data stream has corresponding statistical data, and the statistical data of each data stream is used for generation of an XDR. Thus, after the traffic data is acquired and the corresponding target data stream is determined, the statistical data of the target data stream may be updated according to the traffic data.

In this way, in the combination of the same terminal and the same server (i.e., the user and the website), all the traffic data transmitted in a plurality of different connections (such as socket connections) may be counted into one piece of statistical data, and one XDR may be generated according to the statistical data subsequently. Therefore, each XDR generated with the method according to the embodiments of the present disclosure is actually obtained by "combining" the traffic data in a plurality of connections.

In the embodiments of the present disclosure, the traffic data in different connections between the same terminal and one server (one session) is combined to obtain one XDR, so that a demand for computing resources and storage space is greatly reduced (the demand can be reduced to about 1/10 of the original one), requirements of data production capability can be met, and data storage can be simplified; meanwhile, the contents of each XDR are obtained according to a large amount of data in a plurality of connections, so that the data sources are reliable, statistical indicators are reasonable, data analysis requirements can be met, and good data analysis capability can be provided, which provides a guarantee for the operators to improve network quality for a long time and improve user satisfaction.

In summary, according to the embodiments of the present disclosure, the internet access data of the home broadband user is collected, the data packets are subjected to statistical analysis (such as initial packet decoding, packet header decoding, and service layer decoding), data extraction is performed on a packet decoding result to extract a desired field, an external delivery structure is filled and is mounted to a node for externally sending results, and the XDR of the internet access of the user is generated. On the one hand, output of the traffic data of the user is simplified; on the other hand, the analysis of the traffic of the user is not affected, and end-to-end data sources available for joint analysis are enriched. Driven by diversified markets, data consumption and production gradually become huge, resulting in powerful data production capability of the intelligent big data platforms and infinite possibilities for the data to realize application-layer value.

In addition, according to the embodiments of the present disclosure, by combining the plurality of connections (such as socket connections) into one XDR, the key information for the XDR is collected, and the number of XDRs is effectively reduced, so that a demand of an analysis system for network resources is reduced (the demand can be reduced to about 1/10 of the original one). The method according to the embodiments of the present disclosure is applicable to Domain Name System (DNS) service synthesis, Point-To-Point Protocol Over Ethernet (PPPOE) service synthesis, and general service synthesis which includes Hypertext Transfer Protocol (HTTP) service synthesis and Transmission Control Protocol (TCP) service synthesis.

In some embodiments, the method according to the embodiments of the present disclosure is performed by a DPI device disposed at an access layer or a convergence layer.

In some embodiments, the DPI device is located in an Optical Line Terminal (OLT) or a Broadband Remote Access Server (BRAS).

In an implementation of the embodiments of the present disclosure, the method according to the embodiments of the present disclosure may be performed by a DPI device disposed at an access layer or a convergence layer, that is, the DPI device captures and analyzes the data packets passing through the access layer or the convergence layer to implement the above method.

Further, the DPI device may be disposed in an OLT or a BRAS.

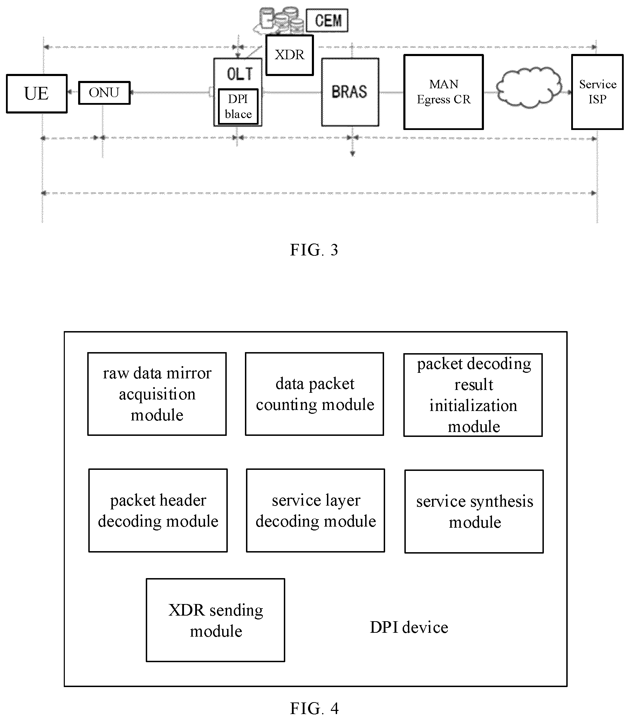

In some implementations, referring to FIG. 3, the DPI device (e.g., a DPI blade or a DPI probe) may be built in the OLT to monitor internet applications, sense real traffic flow of users, generate XDRs, send the XDRs to a big data analysis system, and perform periodic data cleaning and correlation statistics and analysis with other application systems, so as to improve overall service satisfaction of broadband users of the operators.

In some embodiments, referring to FIG. 2, acquiring the traffic data (operation S101 in FIG. 1) includes: operation S1011, copying and decoding data packets to obtain the traffic data.

In an implementation of the embodiments of the present disclosure, each data packet transmitted in a network may be "copied", and then the copied data packet is decoded and analyzed to obtain the traffic data used in the embodiments of the present disclosure, which may avoid affecting a transmission process of the original data packet.

In some embodiments, referring to FIG. 2, determining the data stream corresponding to the traffic data as the target data stream (operation S102 in FIG. 1) includes: operation S1021, determining a data stream corresponding to the traffic data according to Key values of a quintuple of the traffic data, and determining the data stream as the target data stream.

In an implementation of the embodiments of the present disclosure, at this operation, the quintuple (source IP, destination IP, source port, destination port, and protocol type) in the traffic data may be analyzed, and the corresponding target data stream may be determined according to the Key values of the quintuple.

In some embodiments, referring to FIG. 2, updating the statistical data of the target data stream according to the traffic data (operation S103 in FIG. 1) includes operations S1031 and S1032:
operation S1031, in response to a case where the target data stream is not found, creating the target data stream, and creating the statistical data of the target data stream according to the traffic data; and
operation S1032, in response to a case where the target data stream is found, associating the traffic data with the target data stream, and adding the traffic data to the statistical data of the target data stream.

In an implementation of the embodiments of the present disclosure, how to update the statistical data of the target data stream may be determined according to cases of the target data stream.
(1) If the target data stream is not found, it is indicated that the target data stream does not exist, so the traffic data belongs to a new session, and corresponds to a "new" data stream; therefore, a corresponding data stream needs to be created as the target data stream, and the statistical data of the target data stream needs to be "created (updated)" according to the current traffic data.
(2) If the target data stream is found, it is indicated that the target data stream already exists, so the traffic data belongs to an existing session, corresponds to an "old" data stream, and needs to be "combined" into an existing XDR; therefore, the traffic data needs to be "associated" with an existing data stream, and the current traffic data needs to be "added (updated)" to the statistical data of the existing data stream, that is, the statistical data is "combined".

It should be understood that the case where the target data stream does not exist and the case where the target data stream already exists are two different parallel cases, so that the numbers of operations S1031 and S1032 and the order in which operations S1031 and S1032 are described do not indicate a specific execution order of operations S1031 and S1032.

In some embodiments, referring to FIG. 2, the method according to the embodiments of the present disclosure further includes: operation S104, in response to meeting a predetermined condition, generating an XDR according to the statistical data of the data stream, and sending the XDR.

In an implementation of the embodiments of the present disclosure, under a certain condition, a corresponding XDR may be generated according to current statistical data (statistical data having contents) of each data stream, and the XDR is sent to be collected for a subsequent process.

In some embodiments, the predetermined condition includes arrival of a predetermined time. For example, the corresponding XDR may be generated according to the statistical data of each data stream every predetermined time (e.g., 5 min).

It should be understood that the condition for generating the XDR according to the embodiments of the present disclosure is not limited to the above. For example, the XDR may be generated when the number of times of the updating of the statistical data of the data stream reaches a predetermined value (which is equivalent to combining a predetermined amount of traffic data into one XDR).

In some embodiments, operation S104 may be performed after operation S103 in FIG. 1 or after operation S1031 or S1032 in FIG. 2. However, it should be understood that the XDR is generated when the predetermined condition is met, so that the generation of the XDR is not necessarily performed after the operation of updating the statistical data of the target data stream, and the number of operation S104 and the order in which operation S104 is described do not indicate a necessary execution order of operation S104.

Illustratively, the XDR generation method according to the embodiments of the present disclosure may be performed by a DPI device.

The DPI device may receive messages of various protocols, analyze packet headers and protocol message contents, extract important information, convert the important information into parameters desired for the XDR through service data synthesis and conversion, and finally construct and send the XDR.

Illustratively, referring to FIG. 4, the DPI device may include seven components: a raw data mirror acquisition module, a data packet counting module, a packet decoding result initialization module, a packet header decoding module, a service layer decoding module, a service synthesis module, and an XDR sending module.

The raw data mirror acquisition module may be deployed in a bearer device (e.g., an OLT shown in FIG. 3) of an operator, and may mirror data (data packets) passing through the bearer device to mirror control-plane and user-plane traffic data generated when the home broadband user has access to the network into the raw data mirror acquisition module.

At a flow entrance, the data packet counting module is configured to count the number of incoming data packets, the number of bytes in the incoming data packets, the number of data packets to be subjected to packet decoding, and the number of bytes in the data packets to be subjected to packet decoding.

The packet decoding result initialization module is configured to construct a packet decoding result structure, that is, to store a result obtained after the raw data are subjected to a plurality operations of decoding and analysis. Exemplarily, the packet decoding result initialization module may initialize the packet decoding result structure first, and then add information (e.g., length information) of data (e.g., the raw data) to the packet decoding result structure.

The packet header decoding module is configured to perform time analysis, Media Access Control (MAC) layer analysis, Internet Protocol (IP) layer analysis, transport layer analysis, protocol decoding characteristic value setting, and quintuple Key value calculation according to a packet decoding result of the raw data, so as to fill a packet decoding result of packet header parsing information.

The service layer decoding module implements and registers different decoders for different communication protocols, so as to analyze to acquire effective user information from messages of various protocols. Exemplarily, the service layer decoding module may call a corresponding decoder to decode a packet according to different decoder types set during the packet header decoding, and store a result in a decoding result member.

According to the packet decoding result, the service synthesis module extracts a field from the packet decoding result to fill an XDR structure to be sent externally, so as to mount the XDR structure to the node for sending the result externally. The operation of the service synthesis module mainly includes DNS service synthesis, PPPOE service synthesis, and general service synthesis.

The XDR sending module fills a user name (used for identifying different terminals, for example, the user name may be a phone number of a terminal) in an associated data stream (i.e., the target data stream), updates statistical information, status information, time information, and user information in the associated data stream, updates Uniform Resource Locator (URL) information in the associated data stream (HTTP service synthesis only), converts the user information, statistical information, and application information desired for the XDR, updates service subcategories (i.e., the statistical data), and finally sends the XDR.

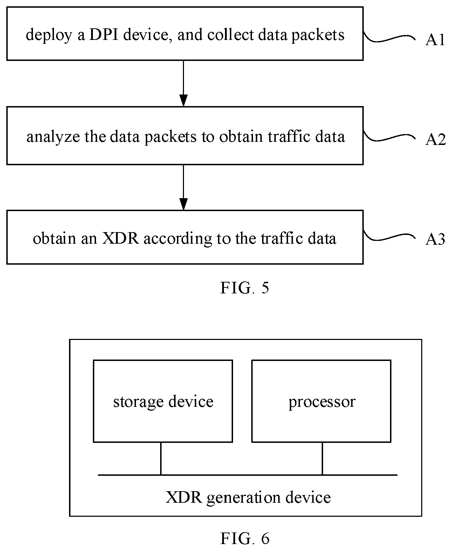

Referring to FIG. 5, the XDR generation method according to an embodiment of the present disclosure may include the following operations A1 to A3.

At operation A1, a DPI device is deployed, and data packets are collected.

The DPI device is deployed in an operator network, and raw data (data packets) of home broadband users generated when the home broadband users have access to the network are collected and copied in real time.

Generally, referring to FIG. 3, the DPI device may be deployed at a BRAS layer or an OLT layer, so upstream data is data sent to the network above the BRAS/OLT, and downstream data is data sent to the network below the BRAS/OLT. Each indicator of an XDR is counted through bidirectional traffic flow in the TCP, and established links are mainly intercepted; meanwhile, data representing network quality such as delay, packet loss, out-of-order, and retransmission in data transmission processes is counted.

Specific fields participating in the construction of the XDR include an XDR user public field, an XDR service public field, an XDR statistics public field, and an XDR service specific field.

At operation A2, the data packets are analyzed to obtain traffic data.

The data of internet access information of user in whole network is acquired, service data messages (i.e., the data packets) are copied and decoded, and each message in the HTTP or the TCP is decoded with a decoder.

Exemplarily, an upstream/downstream direction, a service port number, quintuple values, an application-layer packet byte start position, a DPI decoding position, a decoding length, a payload byte number, a decoding result, and a message time are extracted from a packet header decoding result (packet header decoding) and added to a packet decoding result structure (equivalent to a cache for storing a decoding result); then, a packet delivery structure (equivalent to a template for storing decoding contents) is initialized with a packet decoding result (service layer decoding), and a decoding result pointer of the packet delivery structure is pointed to a decoding result pointer corresponding to the packet decoding result structure; then, the initialized packet delivery structure is input to an XDPI decoding unit, the decoding result of the packet header is made to correspond to the decoding result of the packet contents, the packet decoding result is backfilled with the decoded result, and the packet decoding result is subjected to finalization setting and is stored finally.

At operation A3, an XDR (including service synthesis) is obtained according to the traffic data.

In some embodiments, operation A3 may include the following operations A301 to A309.

At operation A301, the Key values of the quintuple are acquired from the packet decoding result, and a corresponding data stream is searched for according to the Key values to determine whether the data stream exists.

At operation A302, if the data stream does not exist, the data stream is created according to the Key values.

At operation A303, after the corresponding data stream is obtained according to the Key values, a service type of the data stream is updated, a service computing cache space is allocated, and the number of packets and the number of packet bytes added to stream correlation are counted.

At operation A304, it is determined whether the data stream needs to be subjected to multi-stream correlation.

That is, it is determined whether the data stream is newly created and statistical data needs to be written for the first time or whether the data stream already exists and the new data needs to be "combined" into existing statistical data of the data stream.

At operation A305, for the data stream which needs to be subjected to multi-stream correlation, the key values of the data stream are acquired.

For different protocols, specific processing processes of the Key values are different. For example, for a streaming media service, the Key values are source IP+filename; for a data stream service type of HTTP stream (303), the Key values are source IP+destination IP; and for other general service types, the Key values are source IP+protocol type+service type.

At operation A306, information such as quality attributes, which include a count of the data packets and delays of the data packets, is calculated,

At operation A307, the statistical information of the data stream is added to the statistical data of the data stream, and service information, statistical information, and status information are updated.

At operation A308, a start time, an end time, and an upper-layer protocol type of the data stream (including a correlated data stream) are updated, and user name information of the correlated data stream is filled.

At operation A309, when it is determined that the XDR needs to be sent, the XDR of the data stream is sent, and data generation is completed.

In a second aspect, referring to FIG. 6, an embodiment of the present disclosure provides an XDR generation device, which includes one or more storage devices and one or more processors; and the storage device stores a computer program executable by the processor, and when executed by the processor, the computer program implements the XDR generation method according to any one of the embodiments of the present disclosure.

The processor is a device having data processing capability, and includes, but is not limited to, a Central Processing Unit (CPU); the storage device is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the processor and the storage device may be connected to each other through an input/output (I/O) interface (read/write interface) for enabling information interaction therebetween, and the I/O interface includes, but is not limited to, a data bus (Bus).

In some embodiments, the XDR generation device includes a DPI device.

In an implementation of the embodiments of the present disclosure, the XDR generation device may include a DPI device. For example, the XDR generation device may be a DPI device which has a DPI function and is capable of performing the method according to the embodiments of the present disclosure.

In some embodiments, the XDR generation device is configured to be deployed at an access layer or a convergence layer.

In an implementation of the embodiments of the present disclosure, the XDR generation device (e.g., a DPI device, a DPI blade, or a DPI probe) according to the embodiments of the present disclosure may be deployed at an access layer or a convergence layer, such as being deployed in an OLT or a BRAS.

In a third aspect, an embodiment of the present disclosure provides a computer readable medium having stored thereon a computer program which, when executed by a processor, implements the XDR generation method according to any one of the embodiments of the present disclosure.

The processor is a device having data processing capability, and includes, but is not limited to, a CPU; a storage device is a device having data storage capability, and includes, but is not limited to, an RAM (more specifically, an SDRAM, a DDR SDRAM, etc.), an ROM, an EEPROM, and a FLASH; and an I/O interface (read/write interface) is connected between the processor and the storage device, is capable of enabling information interaction between the storage device and the processor, and includes, but is not limited to, a data bus (Bus).

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. An X Detailed Record, XDR, generation method, comprising:
acquiring traffic data;
determining a data stream corresponding to the traffic data as a target data stream; wherein, the data stream is in one-to-one correspondence with a terminal-server combination, and each terminal-server combination comprises one terminal and one server connected to each other; and
updating statistical data of the target data stream according to the traffic data.

2. The method of claim 1, wherein acquiring the traffic data comprises:
copying and decoding data packets to obtain the traffic data.

3. The method of claim 1, wherein determining the data stream corresponding to the traffic data as the target data stream comprises:
determining a data stream corresponding to the traffic data according to Key values of a quintuple of the traffic data, and determining the data stream as the target data stream.

4. The method of claim 1, wherein updating the statistical data of the target data stream according to the traffic data comprises:
in response to a case where the target data stream is not found, creating the target data stream, and creating the statistical data of the target data stream according to the traffic data; and
in response to a case where the target data stream is found, associating the traffic data with the target data stream, and adding the traffic data to the statistical data of the target data stream.

5. The method of claim 1, further comprising:
in response to meeting a predetermined condition, generating an XDR according to the statistical data of the data stream, and sending the XDR.

6. The method of claim 5, wherein
the predetermined condition comprises arrival of a predetermined time.

7. An XDR generation device, comprising at least one storage device and at least one processor; and the at least one storage device stores a computer program executable by the at least one processor, and when executed by the at least one processor, the computer program implements the XDR generation method of any one of claims 1 to 6.

8. The device of claim 7, wherein
the XDR generation device comprises a Deep Packet Inspection, DPI, device.

9. The device of claim 7, wherein
the XDR generation device is configured to be deployed at an access layer or a convergence layer.

10. A computer readable medium having stored thereon a computer program which, when executed by a processor, implements the XDR generation method of any one of claims 1 to 6.
